# EUROPÄISCHE PATENTANMELDUNG

(11) **EP 2 884 232 A1**
(43) Veröffentlichungstag der Anmeldung: **17.06.2015**
(21) Anmeldenummer: 14197680.3
(22) Anmeldetag: 12.12.2014
(51) Int. Cl.: G01D 5/14

(54) **Direktes Vermessen eines Stützfeldes in einem Drehzahlsensor**

(30) Priorität: 12.12.2013 DE 102013225806
(71) Anmelder: Continental Teves AG & Co. oHG, 60488 Frankfurt (DE)
(72) Erfinder: Eckrich, Jörg, 65201 Wiesbaden (DE); Brüggemann, Stephan, 60431 Frankfurt/Main (DE)

(57) **Zusammenfassung**

Die Erfindung betrifft einen Drehzahlsensor (5), insbesondere Raddrehzahlsensor, umfassend
- einen magnetischen Encoder (13) zum Erregen eines magnetischen Encoderfeldes (17) in Abhängigkeit einer zu erfassenden Drehzahl (6),
- einen Lesekopf (14) mit einem magnetoresistiven Messaufnehmer (19) zum Abgeben eines Ausgangssignals (31) in Abhängigkeit des magnetischen Encoderfeldes (17) und des magnetoresistiven Messaufnehmers (19),
- einen ein magnetisches Stützfeld (22) erregenden Stützmagneten (21), der eine Empfindlichkeit des magnetoresistiven Messaufnehmers (19) beeinflusst, und
- einen Magnetfeldsensor (27), der eingerichtet ist, eine Komponente (24) eines am magnetoresistiven Messaufnehmer (19) wirksamen Magnetfeldes (23) in Richtung des magnetischen Stützfeldes (22) zu erfassen.

## Beschreibung

Die Erfindung betrifft ein Verfahren zum Prüfen eines in einem Drehzahlsensor verbauten Stützmagneten, eine Steuervorrichtung zur Durchführung des Verfahrens und einen Sensor mit der Steuervorrichtung.

Aus der WO 2007 014 947 A1 ist ein Drehzahlsensor zur Erfassung einer Drehzahl basierend auf einem sich mit der Drehzahl drehenden magnetischen Encoderfeld über einen magnetoresistiven Messaufnehmer bekannt. In diesem Drehzahlsensor ist eine nachstehend Lesekennlinie genannte Abhängigkeit eines elektrischen Widerstandes des magnetoresitiven Messaufnehmers vom magnetischen Encoderfeld über einen Wertebereich des magnetischen Encoderfeldes linearisiert. Diese Linearisierung ist möglich, weil einem Strom durch den magnetoresisitiven Messaufnehmer ein Stromdichtevektor aufgezwungen ist, der in einem Winkel von 45° zur Vorzugsrichtung des magnetostriktiven Messaufnehmers und damit seiner leichten Achse liegt. In dem Drehzahlsensor ist der Messaufnehmer dabei so angeordnet, dass die Vorzugsrichtung in die Bewegungsrichtung des magnetischen Encoderfeldes gelegt. In dieser Druckschrift wird ferner die Verwendung eines Stützmagneten in dem Drehzahlsensor vorgeschlagen, der die sensorischen Eigenschaften des Drehzahlsensors nur unwesentlich beeinflussen soll.

Es ist Aufgabe der Erfindung, den bekannten Drehzahlsensor zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Drehzahlsensor einen magnetischen Encoder zum Erregen eines magnetischen Encoderfeldes in Abhängigkeit einer zu erfassenden Drehzahl, einen Lesekopf mit einem magnetoresistiven Messaufnehmer zum Abgeben eines Ausgangssignals in Abhängigkeit des magnetischen Encoderfeldes und des magnetoresistiven Messaufnehmers, einen ein magnetisches Stützfeld erregenden Stützmagneten, der eine Empfindlichkeit des magnetoresistiven Messaufnehmers beeinflusst, und einen Magnetfeldsensor, der eingerichtet ist, eine Komponente eines am magnetoresistiven Messaufnehmer wirksamen Magnetfeldes in Richtung des magnetischen Stützfeldes zu erfassen.

Dem angegebenen Drehzahlsensor liegt die Überlegung zugrunde, dass der Stützmagnet in dem eingangs genannten Drehzahlsensor verwendet werden könnte, um die Steigung seiner Lesekennlinie und damit die Empfindlichkeit des magnetorsisitiven Messaufnehmers zu erhöhen. Dies könnte dadurch erreicht werden, dass sein magnetisches Stützfeld so angeordnet wird, dass es der intrinsischen Vormagnetisierung des magnetostresistiven Messaufnehmers in seiner schweren Achse entgegenwirkt. Ein fehlerhaftes magnetisches Stützfeld, das beispielsweise durch einen fehlerhaft ausgerichteten oder überalterten Stützmagneten verursacht werden könnte, könnte dann aber auch zu einem ungewollten Verhalten des magnetoresistiven Messaufnehmers führen. Dies kann zu einer fehlerhaften Erfassung der Drehzahl führen, die beispielsweise bei einem Einsatz in einem Fahrzeug als Raddrehzahlsensor sicherheitskritisch sein könnte. Hier könnte insbesondere die ASIL-Sicherheitsanforderungsstufe der ISO 26262-Norm verletzt werden, im Rahmen derer die funktionale Sicherheit eines Systems mit elektrischen und/oder elektronischen Komponenten im Kraftfahrzeug zu gewährleisten ist.

Hier greift die vorliegende Erfindung mit der Überlegung an, in dem angegebenen Drehzahlsensor einen weiteren Magnetsensor anzuordnen, der es erlaubt, das magnetische Stützfeld auf Fehler hin zu untersuchen. Mit dem zusätzlichen Magnetfeldsensor kann der Drehzahlsensor hinsichtlich seines Stützmagneten in verschiedener Weise untersucht werden, wie beispielsweise ob der Stützmagnet lagerichtig angeordnet ist, ob der Drehzahlsensor eventuell leichte Lageverschiebungen des Stützmagneten noch zulässt, ob das magnetische Stützfeld noch ausreichend hoch ist, und so weiter. Auf diese Weise kann der Stützmagnet im Drehzahlsensor stets auf seinen fehlerfreien Einsatz hin getestet und die Ausfallsicherheit des Drehzahlsensors gesteigert werden.

In einer Weiterbildung des angegebenen Drehzahlsensors umfasst der Magnetfeldsensor einen weiteren magnetoresistiven Messaufnehmer. Unter einem magnetoresisitven Messaufnehmer sollen im Rahmen der vorliegenden Erfindung alle elektronischen Bauteile fallen, die ihren elektrischen Widerstand im Falle eines angelegten Magnetfeldes ändern. Hier wären beispielsweise AMR-Magnetfeldsensorelemente, als auf dem anisotrop magnetoresistiven Effekt beruhende Sensorelemente zu nennen.

Alternativ vorzugsweise umfasst der Magnetfeldsensor einen Hall-Sensor bzw. ein Hallsensorelement bzw. ist der Magnetfeldsensor als Hall-Sensor bzw. Hallsensorelement ausgebildet.

Magnetfeldsensoren mit magnetischen Materialien als magnetoresistive Messaufnehmern, können als reine elektrische Widerstände direkt in einer Auswerteschaltung für den Drehzahlsensor integriert werden, so dass in platzsparender Weise nur noch ein Substrat vorhanden wäre.

Demgegenüber haben Magnetfeldsensoren, in denen der weitere magnetoresitive Messaufnehmer als Hall-Sensor ausgebildet ist den Vorteil, dass diese optimal in einem Messbereich betrieben werden können, der deutlich besser zur Erfassung des magnetischen Stützfeldes geeignet ist, als das magnetische Encoderfeld, das sich mit der zu erfassenden Drehzahl dreht, weil das magnetische Stützfeld in der Regel 10 bis 20 mal größer ist, als das magnetische Encoderfeld.

Gemäß einem weiteren Aspekt der Erfindung umfasst ein Verfahren zur Verwendung eines Magnetfeldsensors in einem der angegebenen Drehzahlsensoren die Schritte Erfassen der Komponente des am magnetoresistiven Messaufnehmer wirksamen Magnetfeldes in Richtung des magnetischen Stützfeldes, und Ausgeben eines Fehlersignales, wenn die erfasste Komponente eine vorbestimmte Bedingung erfüllt.

Durch Verwendung des Magnetfeldsensors und der Ausgabe des Fehlersignals im Rahmen des angegebenen Verfahrens können dem Drehzahlsensor übergeordnete Einheiten, wie beispielsweise eine Motorsteuerung in einem Fahrzeug informiert werden, dass ein Fehler in der Drehzahlmessung aufgetreten und die erfasste Drehzahl damit ungültig ist. Dies ist insbesondere in einem Fahrzeug günstig, an dem die Drehzahlen für jedes einzelne Rad getrennt erfasst werden, um daraus weitere Messwerte, wie beispielsweise ein Gieren des Fahrzeuges abzuleiten. Beispielsweise im Falle einer fehlerhaft erfassten Drehzahl an einem Rad könnte dann fehlerhaft ein Gieren des Fahrzeuges abgeleitet und entsprechend im Rahmen einer Fahrdynamikregelung fälschlicherweise auf dieses nicht vorhandene Gieren mit einem Bremseingriff reagiert werden. Das wiederrum kann sicherheitskritisch im Straßenverkehr sein. Durch das im Rahmen des angegebenen Verfahrens vorgeschlagene Fehlersignal kann die Fahrdynamikregelung in einem solchen Fehlerfall abgeschaltet und der sicherheitskritische Eingriff der Fahrdynamikregelung vermieden werden.

In einer Weiterbildung des angegebenen Verfahrens umfasst die vorbestimmte Bedingung einen vorbestimmten Wert für die erfasste Komponente, den die erfasste Komponente nicht unterschreiten darf. Dieser Weiterbildung liegt die Überlegung zugrunde, dass es eine Folge des oben genannten, fehlerhaften magnetischen Stützfeldes sein könnte, dass diese die Vormagnetisierung des magnetoresistiven Messaufnehmers in der schweren Achse so stark schwächt, dass die Vormagnetisierung bereits durch ein sehr schwaches in der schweren Achse wirkendes magnetisches Wechselfeld gekippt werden kann, was zu einem Flippen des Drehzahlsensors, i.e. einer sprungartigen Drehzahlverdoppelung führt. Ein derartiges schwaches magnetisches Wechselfeld lässt sich technisch bedingt nicht ausschließen. Daher sollte gewährleistet sein, dass die Vormagnetisierung des magnetoresistiven Messaufnehmers in der schweren Achse trotz des magnetischen Stützfeldes ausreichend weit von einer Magnetisierung gleich Null entfernt ist. Der Abstand der Vormagnetisierung von einer Magnetisierung gleich Null kann dabei mit dem Magnetfeldsensor in dem angegebenen Drehzahlsensor über die Komponente des am magnetoresistiven Messaufnehmer wirksamen Magnetfeldes in Richtung des magnetischen Stützfeldes erfasst werden. Ist diese erfasste Komponente ausreichend groß, dann kann das zuvor genannte Umkippen der Vormagnetisierung ausgeschlossen werden.

In einer anderen Weiterbildung des angegebenen Verfahrens umfasst die vorbestimmte Bedingung einen Grenzwert für ein Verhältnis zwischen einem Wechselanteil und einem Gleichanteil in der erfassten Komponente, den das Verhältnis nicht überschreiten darf. Der angegebenen Weiterbildung liegt die Überlegung zugrunde, dass das oben genannte schwache magnetische Wechselfeld gegenüber dem Anteil des am magnetoresistiven Messaufnehmer wirksamen magnetischen Stützfeldes umso stärker wird, desto weiter der Stützmagnet vom magnetoresisitven Messaufnehmer platziert ist. Daher kann aus dem zuvor genannten Verhältnis zwischen einem Wechselanteil und einem Gleichanteil in der erfassten Komponente direkt auf die Lage des Stützmagneten geschlossen und diese bewertet werden. Je weiter der Stützmagnet gegenüber dem magnetoresistiven Messaufnehmer deplatziert ist, desto größer wird das Verhältnis. Das der Stützmagnet eine bestimmte Deplatzierung nicht überschreiten sollte, kann für das Verhältnis der Grenzwert definiert werden, der diese maximal zulässige Deplatzierung beschreibt und auf der Stützmagnet dann im Rahmen des angegebenen Verfahrens hin überwacht werden kann.

Gemäß einem weiteren Aspekt der Erfindung ist eine Vorrichtung eingerichtet, eines der angegebenen Verfahren durchzuführen.

In einer Weiterbildung der angegebenen Vorrichtung weist die angegebene Vorrichtung einen Speicher und einen Prozessor auf. Dabei ist eines angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die angegebene Vorrichtung kann dabei als Teststation im Rahmen des Fertigungsprozesses des Drehzahlsensors oder als Zusatzelement in einem fertigen Drehzahlsensor, wie beispielsweise einem der angegebenen Drehzahlsensoren ausgebildet sein.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug einen angegebenen Drehzahlsensor.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Drehzahlsensors in der Fahrdynamikregelung der Fig. 1,
Fig. 3 ein Diagramm zum Darstellen eines Verlaufes eines Ausgangssignals aus dem Drehzahlsensor,
Fig. 4 Verläufe von Lesekennlinien eines magnetoresistiven Messaufnehmers in dem Drehzahlsensor der Fig. 2, die in Abhängigkeit eines Magnetfeldes in der schweren Achse aufgetragen sind, wobei jede Lesekennlinie die Abhängigkeit des elektrischen Widerstandes des magnetoresistiven Messaufnehmers über ein in der leichten Achse wirkendes Magnetfeld beschreibt,
Fig. 5 den Verlauf des elektrischen Widerstandes des magnetoresistiven Messaufnehmers in Abhängigkeit eines sich in der leichten und schweren Achse des magnetoresistiven Messaufnehmers verändernden Magnetfeldes,
Fig. 6 den Verlauf des elektrischen Widerstandes des magnetoresistiven Messaufnehmers in Abhängigkeit eines sich in der leichten und schweren Achse des magnetoresistiven Messaufnehmers verändernden Magnetfeldes, wenn ein magnetisches Stützfeld in einer ersten Höhe angelegt ist,
Fig. 7 den zeitlichen Verlauf einer Radialkomponente eines am magnetoresisitiven Messaufnehmer anliegenden magnetischen Feldes,
Fig. 8 den Verlauf eines Verhältnisses eines Wechselanteils zu einem Gleichanteil der Radialkomponente aus Fig. 7 über einen Abstand zwischen einem Stützmagneten und einem magnetischen Encoder in dem Drehzahlsensor der Fig. 2, und
Fig. 9 eine Schnittdarstellung des Drehzahlsensors der fig. 2 zeigen.

In den Figuren werden gleiche technische Elemente mit gleichen Bezugszeichen versehen und nur einmal beschrieben.

Nachstehend soll die Erfindung in nicht einschränkender Weise anhand eines in einem Fahrzeug 2 verwendeten Raddrehzahlsensor 10 näher beschrieben werden.

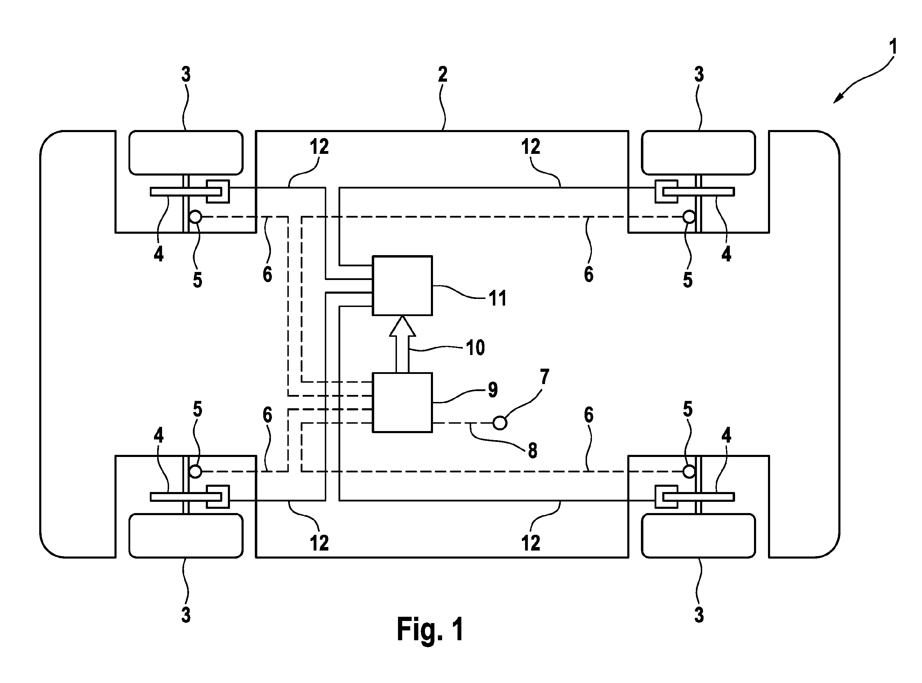

Es wird auf Fig. 1 Bezug genommen, die eine schematische Ansicht des Fahrzeuges 1 mit einer an sich bekannten Fahrdynamikregelung zeigt. Details zu dieser Fahrdynamikregelung können beispielsweise der DE 10 2011 080 789 A1 entnommen werden.

Das Fahrzeug 1 umfasst ein Chassis 2 und vier Räder 3. Jedes Rad 3 kann über eine ortsfest am Chassis 2 befestigte Bremse 4 gegenüber dem Chassis 2 verlangsamt werden, um eine Bewegung des Fahrzeuges 1 auf einer nicht weiter dargestellten Straße zu verlangsamen.

Dabei kann es in einer dem Fachmann bekannten Weise passieren, dass das die Räder 3 des Fahrzeugs 1 ihre Bodenhaftung verlieren und sich das Fahrzeug 1 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 1 dafür Drehzahlsensoren 5 an den Rädern 3 auf, die eine Drehzahl 6 der Räder 3 erfassen. Ferner weist das Fahrzeug 1 einen Inertialsensor 7 auf, der Fahrdynamidaten 8 des Fahrzeuges 1 erfasst aus denen beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben werden kann.

Basierend auf den erfassten Drehzahlen 6 und Fahrdynamikdaten 8 kann ein Reglers 9 in einer dem Fachmann bekannten Weise bestimmen, ob das Fahrzeug 1 auf der Fahrbahn rutscht oder sogar von der oben genannten vorgegebenen Trajektorie abweicht und entsprechen mit einem an sich bekannten Reglerausgangssignal 10 darauf reagieren. Das Reglerausgangssignal 10 kann dann von einer Stelleinrichtung 11 verwendet werden, um mittels Stellsignalen 12 Stellglieder, wie die Bremsen 4 anzusteuern, die auf das Rutschen und die Abweichung von der vorgegebenen Trajektorie in an sich bekannter Weise reagieren.

Der Regler 9 kann beispielsweise in eine an sich bekannte Motorsteuerung des Fahrzeuges 1 integriert sein. Auch können der Regler 9 und die Stelleinrichtung 11 als eine gemeinsame Regeleinrichtung ausgebildet und optional in die zuvor genannte Motorsteuerung integriert sein.

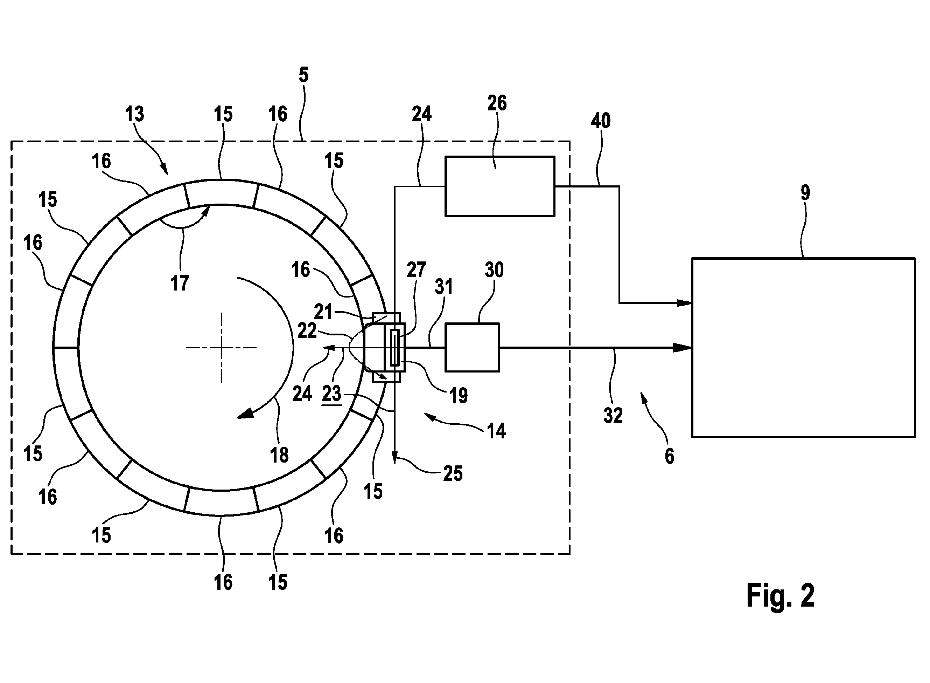

Es wird auf Fig. 2 Bezug genommen, die eine schematische Ansicht einer der Drehzahlsensoren 5 in der Fahrdynamikregelung der Fig. 1 zeigt.

Der Drehzahlsensor 5 ist in der vorliegenden Ausführung als aktiver Drehzahlsensor ausgeführt, der eine drehfest am Rad 3 befestigte Encodersscheibe 13 und einen ortsfest zum Chassis 2 befestigen Lesekopf 14 umfasst.

Die Encoderscheibe 13 besteht in der vorliegenden Ausführung aus aneinandergereihten Magnetnordpolen 14 und Magnetsüdpolen 16, die gemeinsam ein mit einem beispielhaften Pfeil angedeutetes magnetisches Encoderfeld 17 erregen. Dreht sich die am Rad 3 befestigte Encoderscheibe 13 mit diesem in eine Drehrichtung 18, dreht sich das magnetische Encoderfeld 17 so mit.

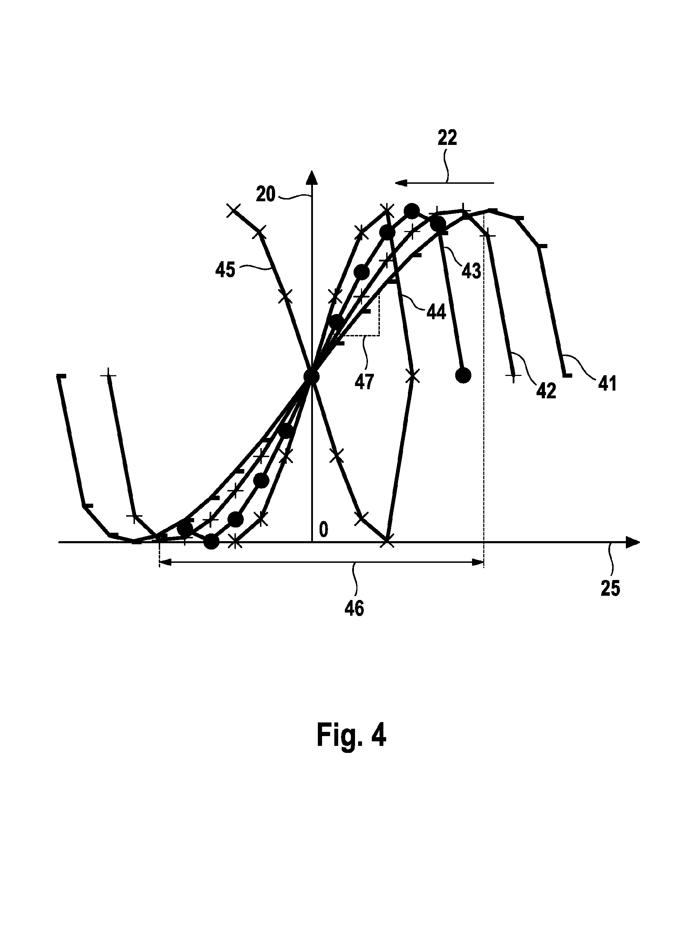

Der Lesekopf 14 umfasst in der vorliegenden Ausführung einen magnetorsistiven Messaufnehmer 19, der seinen in Fig. 4 mit dem Bezugszeichen 20 angedeuteten elektrischen Widerstand in Abhängigkeit des magnetischen Encoderfeldes 17 ändern soll. Da sich das magnetische Encoderfeld 17 mit dem Encoderrades 13 dreht, kann der elektrische Widerstand 20 so als von der Drehzahl 6 abhängige Messgröße herangezogen werden. In der vorliegenden Ausführung wird das magnetische Encoderfeld 17 ferner mit einem durch einen Stützmagneten 21 erregten magnetischen Stützfeld 22 überlagert, so dass an den magnetoresistiven Messaufnehmer 19 ein Summenmagnetfeld 23 anliegt, das gesehen in einer zur Drehrichtung 18 eine Radialkomponente 24 und eine Tangentalkomponente 25 aufweist.

Ferner ist in dem Drehzahlsensor 5 eine Testvorrichtung 26 angeordnet, die mit einem Magnetfeldsensor 27 über eine Messleitung verbunden ist. Der Magnetfeldsensor 27 erfasst die Radialkomponente 24 des Summenfeldes 24, so dass sich die Wirkung des magnetischen Stützfeldes 22 in dem Drehzahlsensor 5 untersuchen lässt. Auf weitere Hintergründe zur Testvorrichtung 26 wird an späterer Stelle eingegangen.

An den magnetoresistiven Messaufnehmer 19 ist eine Signalaufbereitungsschaltung 30 angeschlossen, die an den magnetoresistiven Messaufnehmer 19 einen Prüfstrom in einer vorbestimmten Höhe anlegt. Der Prüfstrom ruft am magnetoresistiven Messaufnehmer 19 einen vom elektrischen Widerstand 20 abhängigen Spannungsabfall hervor. Dieser Spannungsabfall kann durch die Signalaufbereitungsschaltung 30 als vom elektrischen Widerstand 20 des magnetoresistiven Messaufnehmers 19 abhängiges Ausgangssignal 31 abgegriffen werden. Da sich der elektrische Widerstand 20 in Abhängigkeit des magnetischen Encoderfeldes 17 prinzipbedingt periodisch ändern muss, kann die Signalaufbereitungsschaltung 30 in einem Pulssignal 32 für jede aufgetretene Periode einen Puls ausgeben, wobei aus der Anzahl der Pulse pro Zeiteinheit unmittelbar die Drehzahl 6 abgeleitet werden kann. Das nach diesem Prinzip erzeugte Pulssignal 32 kann beispielsweise zu weiteren Verarbeitung an den Regler 9 ausgegeben werden.

In an sich bekannter Weise weist der magnetoresistive Messaufnehmer 19 eine leichte Achse auf, in der eine Veränderung des anliegenden Summenmagnetfeldes 23 die größte Änderung des elektrischen Widerstandes 20 hervorruft. Entsprechend weist der magnetoresistive Messaufnehmer 19 eine rechtwinklig dazu liegende schwere Achse auf, in der eine Veränderung des anliegenden Summenmagnetfeldes 23 die kleinste Änderung des elektrischen Widerstandes 20 hervorruft. Es sollte unmittelbar verständlich sein, dass der magnetoresisitive Messaufnehmer 19 mit seiner leichten Achse in Richtung der Tangentialkomponente 25 des Summenmagnetfeldes 23 ausgerichtet sein sollte, weil diese in die Drehrichtung 18 Encoderrades 13 zeigt.

Es ist wünschenswert, dass sich das Ausgangssignal 31 in Abhängigkeit des magnetischen Encoderfeldes 17 linear ändert, so dass beispielsweise aus dem Ausgangssignal 31 ersichtlich ist, ob sich unterhalb des Lesekopfes 14 ein Nordpol 15 oder ein Südpol 16 befindet. Jedoch ändert sich der elektrische Widerstand 20 des magnetoresisitven Messaufnehmers 19 in der zuvor erläuterten Konfiguration des Lesekopfes über die Tangentialkomponente 25 des am magnetoresistiven Messaufnehmer 19 wirksamen Summenmagnetfeldes 23, wie in der WO 2007 014 947 A1, beschrieben quadratisch.

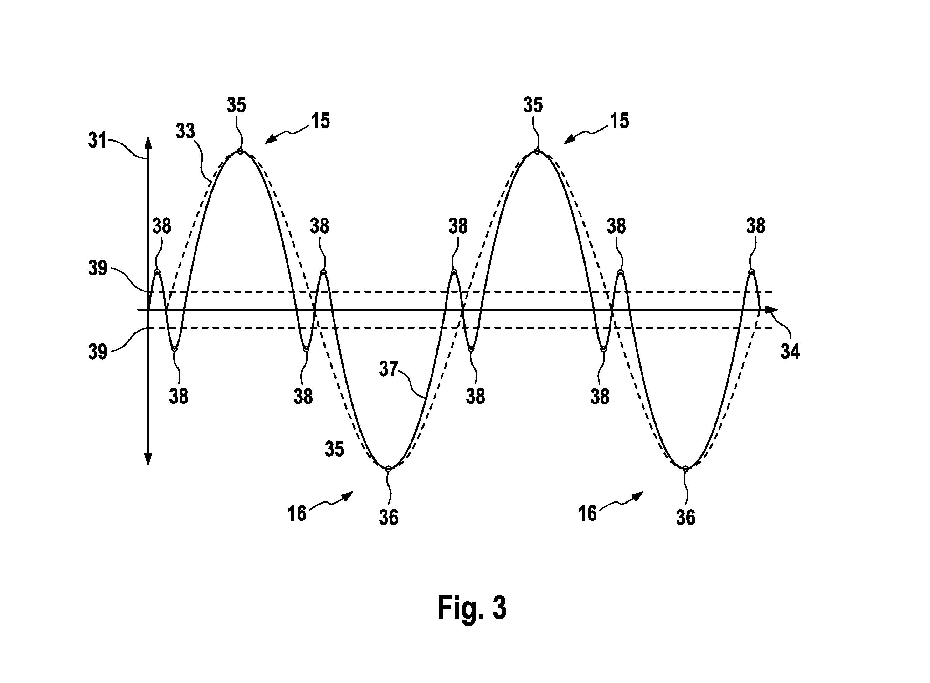

Wie aus weiter der WO 2007 014 947 A1 bekannt könnte der magnetoresistive Messaufnehmer 19 zur teilweisen Linearisierung der nichtlinearen Abhängigkeit des elektrischen Widerstandes 20 des magnetoresistiven Messaufnehmers 19 von der Tangentialkomponente 25 des Summenmagnetfeldes 23 beispielsweise mit der Barberpole-Technik so ausgebildet werden, dass ein Stromdichtevektor des oben genannten Prüfstroms durch den magnetoresisitven Messaufnehmer 19 in einem Winkel von 45° zur Vorzugsrichtung des magnetostriktiven Messaufnehmers 19, also seiner leichten Achse liegt. Mittels dem Stützmagneten 21 kann dabei die Empfindlichkeit des magnetostriktiven Messaufnehmers 19, also die Höhe der Änderung seines elektrischen Widerstandes 20 auf eine Änderung der Tangentialkomponente 25 des Summenmagnetfeldes 22, eingestellt werden, worauf an späterer Stelle näher eingegangen wird. In Fig. 3 ist dabei in einer gestrichelten Linie ein gewünschter Signalverlauf 33 des Ausgangssignals 31 über die Zeit 34 aufgetragen. Deutlich zu sehen sind die positiven Maxima 35 und die negativen Minima 36, aus denen entsprechend erkennbar ist, ob unter dem magnetoresistiven Messaufnehmer 19 ein Nordpol 15 oder ein Südpol 16 der magnetischen Encoderscheibe 13 liegt.

Es zeigt kann jedoch vorkommen, dass ein tatsächlicher Signalverlauf 37 deutlich vom gewünschten Signalverlauf 33 abweicht. Es hat sich gezeigt, dass diese Abweichungen durch den Stützmagneten 21 und/oder sein magnetisches Stützfeld 20 hervorgerufen werden. Dabei werden in das Ausgangssignal 31 Zusatzpulse 38 eingebracht, die je nach Höhe der Schaltschwellen 39 zur Erzeugung des Pulssignals 32 auch als Drehzahlpulse in diesem auftreten können. Der ein derartiges Pulssignal 32 erfassende Regler 9 würde dann aus dem Pulssignal 32 eine Drehzahl 6 ableiten, die doppelt so hoch ist, wie die tatsächliche Drehzahl. Die Drehzahlsensoren 5 können auch zur Bestimmung einer Gierbewegung des Fahrzeuges 1 verwendet werden. Wenn einer der Drehzahlsensoren 5 ein zu einer doppelten Drehzahl 6 führendes Pulssignal 32 ausgibt, würde dies bedeuten, dass der Regler 9 für das Fahrzeug 1 eine nicht vorhandene Gierbewegung des Fahrzeuges 1 ableitet und entsprechend auf diese durch Stelleingriffe 12 beispielsweise über die Bremsen 4 reagiert.

Aus diesem Grund ist die Testvorrichtung 26 vorgesehen. Diese vermisst im Rahmen der vorliegenden Ausführung mit dem Magnetfeldsensor 27 die Radialkomponente 24 des Summenmagnetfeldes 23 am magnetoresistiven Messaufnehmer 19, die vom magnetischen Stützfeld 22 abhängig ist. Unter bestimmten Fehlerbedingungen für die Radialkomponente 24 des Summenmagnetfeldes 23, unter denen der zuvor genannte Sprung in der durch den Drehzahlsensor 5 erfassten Drehzahl 6 droht, gibt die Testvorrichtung 26 ein Fehlersignal 40 aus, um dem Regler 9 die Ungültigkeit der in dem Pulssignal 32 übermittelten Drehzahl 6 mitzuteilen.

Bevor auf die zuvor genannten Fehlerbedingungen näher eingegangen wird, soll zunächst erläutert werden, wie es zu der Entstehung der Zusatzpulse 38 kommt. Dazu wird zunächst auf Fig. 4 Bezug genommen, die Verläufe von Lesekennlinien 41, 42, 43, 44 und 45 des magnetoresistiven Messaufnehmers 19 in dem Drehzahlsensor 5 der Fig. 2 zeigt, die in Abhängigkeit der Tangentialkomponente 25 aufgetragen sind.

Es soll zunächst als Grundlesekennlinie die Lesekennlinie 41 der Lesekennlinien 41, 42, 43, 44 und 45 betrachtet werden, deren Verlauf des elektrischen Widerstandes 20 des magnetoresistiven Messaufnehmers 19 über die Tangentialkomponente 25 des Summenmagnetfeldes 23 ohne den Stützmagneten 21 und seinem magnetischen Stützfeld 22 entspricht. Diese Grundlesekennlinie ist in Fig. 4 die Lesekennlinie 41, die am stärksten in Richtung der Achse der Tangentialkomponente 25 des Summenmagnetfeldes 23 gestreckt ist. Innerhalb eines Linearbereichs 46 kann diese Grundlesekennlinie 41 als über die Tangentialkomponente 25 des Summenmagnetfeldes 23 mit einer Steigung 47 linear verlaufend angesehen werden.

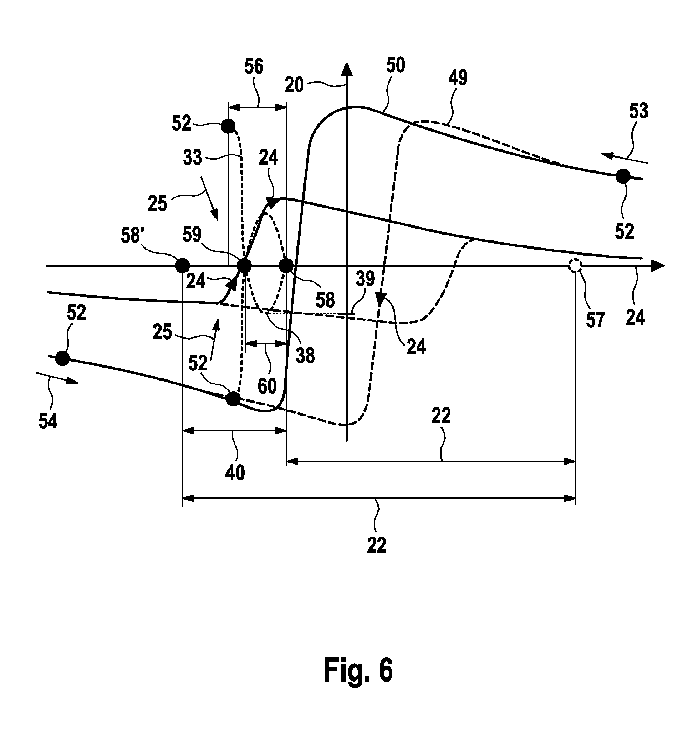

Die Grundlesekennlinie 41 des magnetoresistiven Messaufnehmers 19 kann dabei durch das magnetische Stützfeld 22 des Stützmagneten 21 in Richtung der Achse des elektrischen Widerstandes 20 gestaucht werden. Dies kann anhand der Formel der Fig. 6 der WO 2007 014 947 A1 nachvollzogen werden. Mit der durch die Stauchung der Grundlesekennlinie 41 geänderten Steigung 47 wird entsprechend die oben genannte Empfindlichkeit 46 des Drehzahlsensors 5 erhöht.

Wie bereits erläutert, kann die Steigung 47 der Grundlesekennlinie 39 durch das magnetische Stützfeld 22 erhöht werden. Dies ist jedoch nur bis zu einem bestimmten Wert des magnetischen Stützfeldes 50 möglich. Ab dem Moment, ab dem eine intrinsische Vormagnetisierung des magnetoresistiven Messaufnehmers 19 vollständig aufgehoben ist und die tatsächliche Vormagnetisierung des magnetoresistiven Messaufnehmers 19 ihr Vorzeichen wechselt, wird die Grundlesekennlinie 41 an der Achse des Widerstandes 20 achsengespiegelt und die Steigung 47 wird negativ. Dieser Vorgang kann als Flippen des magnetoresistiven Messaufnehmers 19 und damit des Drehzahlsensors 5 bezeichnet werden und sorgt dafür, dass sich der Signalverlauf des Ausgangssignals 31 ändert.

Bei der Veränderung der Steigung 47 der Grundlesekennlinie 41 und der Einstellung einer der Kennlinien 42, 43 oder 44 darf jedoch eine Radialkomponente des magnetischen Encoderfeldes 17 nicht außer Acht gelassen werden, die ebenfalls in die Richtung des magnetischen Stützfeldes 22 wirkt. Die eingestellte Lesekennlinie 42, 43 oder 44 muss von der Achse des Widerstandes 20 einen ausreichenden Abstand aufweisen, da der magnetoresistive Messaufnehmer 19 ansonsten durch das Flippen die in Fig. 3 gezeigten Zusatzpulse 38 einbringt.

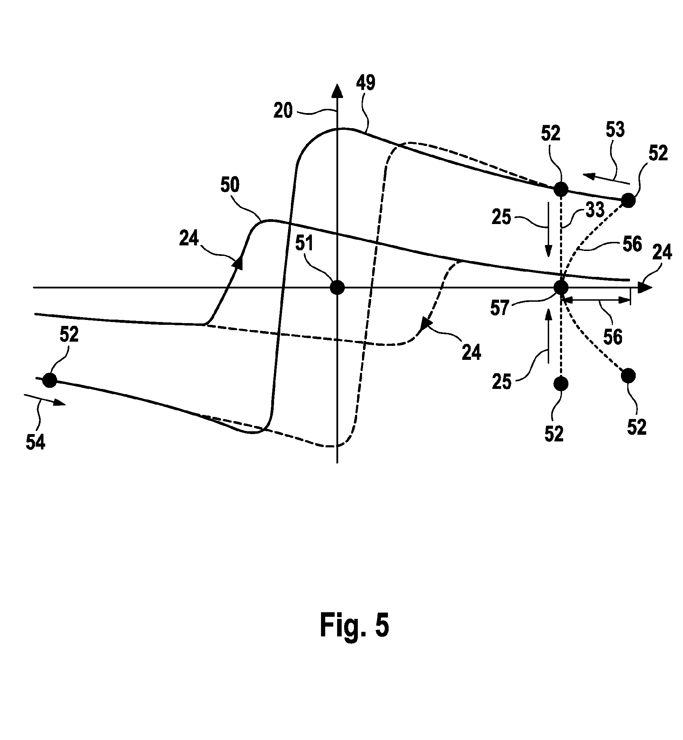

Das Flippen des magnetoresistiven Messaufnehmers 35 im Rahmen der Verwendung des Stützmagneten 21 soll nachstehend anhand der Fig. 5 und 6 näher erläutert werden, die qualitativ den Verlauf des elektrischen Widerstandes 20 des magnetoresistiven Messaufnehmers 19 in Abhängigkeit der Radialkomponente 24 und der Tangentialkomponente 25 des Summenmagnetfeldes 23 entsprechend ohne und mit dem Stützmagneten 21 anhand einer ersten Kurve 49 und einer zweiten Kurve 50 andeuten. Der Verlauf und damit die beiden Kurven 49, 50 können anhand der Formel der Fig. 6 der WO 2007 014 947 A1 hergeleitet werden, worauf der Kürze halber nicht weiter eingegangen werden soll.

In den Fig. 5 und 6 ist die Radialkomponente 24 des Summenmagnetfeldes 23 auf der Abszisse des gezeigten kartesischen Koordinatensystems aufgetragen, während die Tangentialkomponente 25 des Summenmagnetfeldes 23 (die in Fig. 3 als Laufvariable verwendet ist) als Formvariable angedeutet ist. Der Übersichtlichkeit halber wurde die Achse der Radialkomponente 24 (x-Achse) durch einen Punkt 51 auf der Achse des elektrischen Widerstandes 20 gelegt, der dem Symmetriepunkt aller Kurven 49, 50 entspricht. Dabei soll die Tangentialkomponente 25 des Summenmagnetfeldes 23, die für die erste Kurve mit dem Bezugszeichen 49 notwendig ist größer sein, als die Tangentialkomponente 25 des Summenmagnetfeldes 23, die für die zweite Kurve mit dem Bezugszeichen 50 notwendig ist. Damit werden die Kurven 49, 50 mit zunehmender Tangentialkomponente 25 des Summenmagnetfeldes 23 immer weiter zur Achse der Radialkomponente 24 des Summenmagnetfeldes 23 hin gestaucht.

Zunächst soll anhand von Fig. 5 der Verlauf des elektrischen Widerstandes 20 des magnetoresistiven Messaufnehmers 19 erläutert werden, ohne dass der Stützmagnet 21 verwendet wird.

Solange die Tangentialkomponente 25 des Summenmagnetfeldes 23 konstant ist, würde ein Wert 52 des elektrischen Widerstandes 20 für eine sich negativ verändernde Radialkomponente 24 des Summenmagnetfeldes 23 auf einer konstant bleibenden Kurve 49, 50 in einer Richtung entgegen der Achse der Radialkomponente 24 laufen, die mit einem Pfeil 53 angedeutet ist. Entsprechend würde der Wert 52 des elektrischen Widerstandes 20 für eine sich positiv verändernde Radialkomponente 24 des Summenmagnetfeldes 23 in der in einer Richtung in der Achse der Radialkomponente 24 laufen, die mit einem Pfeil 54 angedeutet ist. Ein derartiges Szenario ist jedoch für den vorliegenden Anwendungsfall uninteressant, weil die Änderung des magnetischen Encoderfeldes 17 in Richtung der Tangentialkomponente 25 des Summenmagnetfeldes 23 und nicht in Richtung der Radialkomponente 24 erfasst werden soll.

Im idealen Anwendungsfall des Drehzahlsensors 5 sollte bei einer Drehung des Encoderrades 13 und damit des magnetischen Encoderfeldes 17 lediglich die Tangentialkomponente 25 des Summenmagnetfeldes 23 ändern, nicht jedoch aber die Radialkomponente 24. Im Falle einer solchen konstanten Radialkomponente 24 und einer sich ändernden Tangentialkomponente 25 würde sich der Wert 52 des elektrischen Widerstandes 20 auf einer in Fig. 5 gepunktet dargestellten, geraden Kurve bewegen, die rechtwinklig zur Achse der Radialkomponente 24 verläuft. Diese Kurve ist mit dem Bezugszeichen 33 versehen, weil sich durch die Drehung des Encoderrades 13 die Tangentialkomponente 25 periodisch ändert, wodurch der Wert 52 des elektrischen Widerstandes 20 auf dieser Kurve 33 pendelt, so dass über die Zeit 34 der in Fig. 3 dargestellte gewünschte Kurvenverlauf 33 für das Ausgangssignal 31 erreicht wird.

Bei der Drehung des Encoderrades 13 bringt das magnetische Encoderfeld 17 jedoch in das Summenmagnetfeld 23 nicht nur eine periodische Änderung der Tangentialkomponente 25 sondern auch eine periodische Änderung der Radialkomponente 24 ein, so das der ideale Kurvenverlauf 33 niemals erreicht werden kann. Der Wert 52 würde sich in diesem Fall auf einer in Fig. 5 gepunktet dargestellten, elliptisch verlaufenden Kurve 56 bewegen, weil sich zusätzlich zur Tangentialkomponente 25 auch die Radialkomponente 24 mit einer gewissen Amplitude 57 ändert.

Die den Verlauf des elektrischen Widerstandes 20 zeigenden Kurven 33, 56 schneiden die Achse der Radialkomponente 24 in einem radialen intrinsischen Vormagnetisierungspunkt 57, der die Vormagnetisierung des magnetoresisitiven Messaufnehmers 19 in seiner schweren Achse darstellt.

Dieser intrinsische Vormagnetisierungspunkt 57 in der schweren Achse kann, wie in Fig. 6 gezeigt, durch den Stützmagneten 21 und sein magnetisches Stützfeld 22 auf der Achse der Radialkomponente 24 verschoben werden, so dass sich ein tatsächlicher Vormagnetisierungspunkt 58 einstellt, der entsprechend mit dem magnetischen Stützfeld 22 vom intrinsischen Vormagnetisierungspunkt 57 beabstandet ist.

Während im Rahmend der Fig. 5 bei der Änderung des Wertes 52 des elektrischen Widerstandes 20 des magnetoresistiven Messaufnehmers 19 die Radialkomponente 24 und die Tangentialkomponente 25 stets richtungsgleich wirken, gibt es im Rahmen der Fig. 6 einen Umkehrpunkt 59, ab dem die Radialkomponente 24 und die Tangentialkomponente 25 bei der Änderung des Wertes 52 des elektrischen Widerstandes 20 des magnetoresistiven Messaufnehmers 19 diametral entgegenwirken. Dadurch wird der ideale Kurvenverlauf 33 der Fig. 5 verdreht und es entsteht ein Kurvenverlauf bei dem zwei elliptische Kurvenverläufe entstehen, die zu dem tatsächlichen Signalverlauf 37 in Fig. 3 führen. Daher ist der entstehende Kurvenverlauf in Fig. 6 ebenfalls mit dem Bezugszeichen 37 versehen. Dabei bewirkt der kleinere der beiden elliptischen Kurvenverläufe die Zusatzpulse 38, die in Fig. 6 mit dem entsprechenden Bezugszeichen angedeutet sind.

Je weiter der tatsächliche Vormagnetisierungspunkt 58 durch den Stützmagneten 22 über den Umkehrpunkt 59 in Richtung Nullpunktes der Radialkomponente 24 des Summenmagnetfeldes 22 hinausgeschoben wird, desto größer sind die Zusatzpulse 38. Das heißt aber auch, dass mittels des Übertrittsabstandes 60 des tatsächlichen Vormagnetisierungspunktes 58 über den Umkehrpunkt 59 die Höhe der Zusatzpulse 38 eingestellt werden kann.

In Fig. 6 ist der maximal mögliche Übertrittsabstand 60 angedeutet, ab dem die Zusatzpulse 38 die Schaltschwellen 39 übertreten und somit zu der oben beschriebenen Frequenzverdoppelung des Pulssignals 39 führen würden. Im Rahmen der vorliegenden Ausführung könnte mit dem Magnetfeldsensor 27 ein aktueller, tatsächlicher Vormagnetisierungspunkt 58' gemessen werden. Rechnerisch oder experimentell könnte der oben genannte tatsächliche Vormagnetisierungspunkt 58 bestimmt und in der Testvorrichtung 26 hinterlegt werden, bei der die Zusatzpulse 38 die Schaltschwellen 39 überschreiten. Unterschreitet der aktuell gemessene, tatsächliche Vormagnetisierungspunkt 58' den vorbestimmten tatsächlichen Vormagnetisierungspunkt 58, dann kann auf ein Flippen des Drehzahlsensors 5 entschieden und das oben genannte Fehlersignal 40 ausgegeben werden.

Ferner könnte auch die Lage des Stützmagneten 21 mit dem Magnetfeldsensor 27 bestimmt werden.

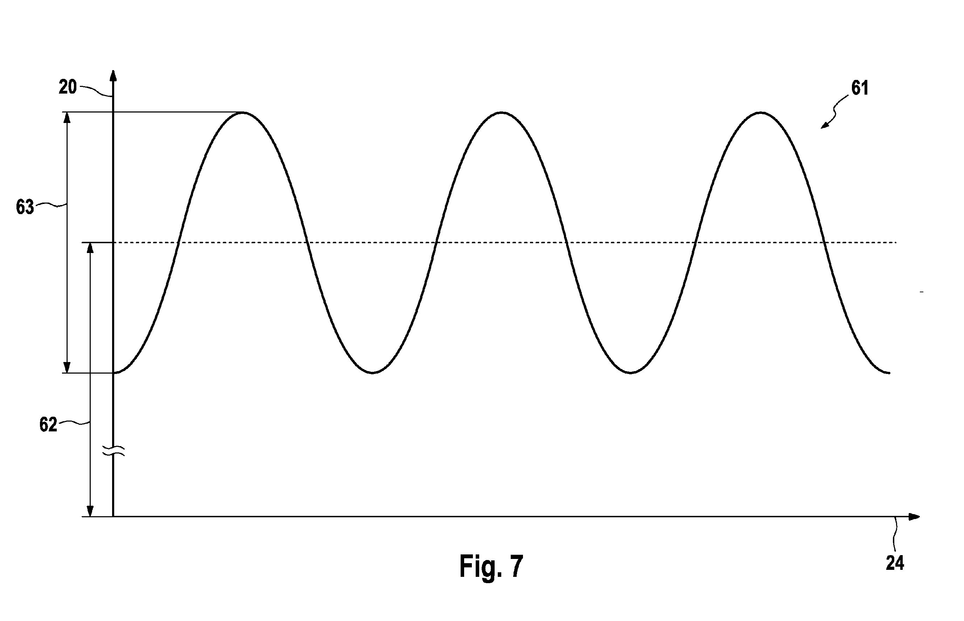

Dazu wird auf Fig. 7 Bezug genommen, die einen beispielhaften Verlauf 61 der Radialkomponente 24 des Summenmagnetfeldes 22 über die Zeit 34 zeigt.

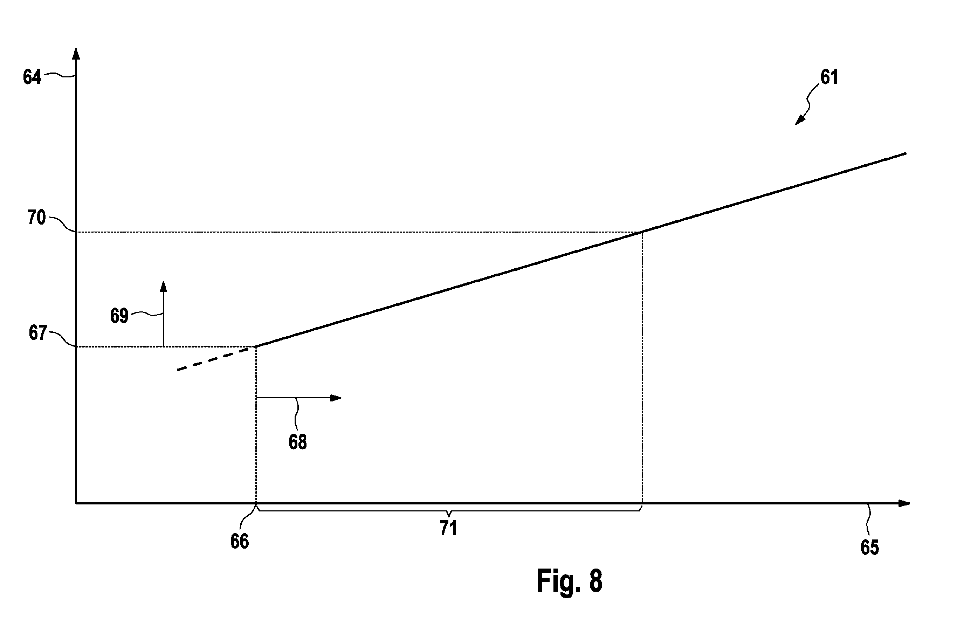

Die Radialkomponente 24 des Summenmagnetfeldes 23 setzt sich aus einem Gleichanteil 62, der durch das magnetische Stützfeld 22 gebildet wird, und einen Wechselanteil 63 zusammen, der durch die Radialkomponente des magnetischen Encoderfeldes 17 gebildet wird. Je nachdem, in welcher Lage der Stützmagnet 21 zur Encoderscheibe 13 angeordnet ist, ist verändert sich auch der Verlauf 61 der Fig. 7. Im Einzelnen wird das magnetische Stützfeld 22 gegenüber dem Wechselanteil 63 in der Radialkomponente 24 des Summenmagnetfeldes 22 immer schwächer, so dass entsprechend ein Verhältnis 64 zwischen dem Wechselanteil 63 und dem Gleichanteil 62 immer größer wird. Dieses Verhältnis 64 ist beispielhaft in Fig. 8 in Abhängigkeit eines Abstandes 65 des Stützmagneten 22 vom magnetischen Encoderrings 13 aufgetragen.

Ist der Stützmagnet 22 lagerichtig 66 unter dem Encoderring 13 positioniert, so weist das Verhältnis 64 zwischen dem Wechselanteil 62 und dem Gleichanteil 62 einen entsprechenden lagerichtigen Wert 67 auf. Eine Lageverschiebung 68 des Stützmagneten 21 gegenüber dem magnetischen Encoderring 13 führt zu einer Schwächung des magnetischen Stützfeldes 22 und damit des Gleichanteil 62, was wiederum den Wechselanteil 63 gegenüber dem Gleichanteil 62 stärkt und zu einer Erhöhung 69 des Verhältnisses 64 zwischen dem Wechselanteil 63 und dem Gleichanteil 62 führt.

Wie in Fig. 6 zu sehen führt eine Schwächung des Stützfeldes 22 und damit des Gleichanteils 62 dazu, dass die tatsächliche Vormagnetisierung 58' irgendwann den Umkehrpunkt 59 passiert und der magnetoresistive Messaufnehmer 19 zu flippen beginnt. Ab der tatsächlichen Vormagnetisierung mit dem Bezugszeichen 58 sind dabei die durch das Flippen verursachten Zusatzpulse 38 im Pulssignal 32 des Drehzahlsensors 5 sichtbar. Folglich kann dieser grenzwertigen tatsächliche Vormagnetisierung mit dem Bezugszeichen 58 ein bestimmter Grenzwert für den Gleichanteil 62 und damit auch ein bestimmter Grenzwert 70 für das Verhältnis 64 in Fig. 8 zugeordnet werden, den das Verhältnis 64 nicht überschreiten darf, damit sich das Flippen des magnetoresistiven Messaufnehmers 10 nicht im Pulssignal 32 des Drehzahlsensors 5 bemerkbar macht.

Wenn dieser bestimmte Grenzwert 70 für das Verhältnis 64 bekannt ist, kann mit der Testvorrichtung 26 auch eine Reserve 71 bestimmt werden, mit der der Abstand des Stützmagnet 22 vom magnetischen Encoder 13 noch vergrößert werden kann, ohne dass sich ein Flippen im Pulssignal 32 des Drehzahlsensors bemerkbar macht.

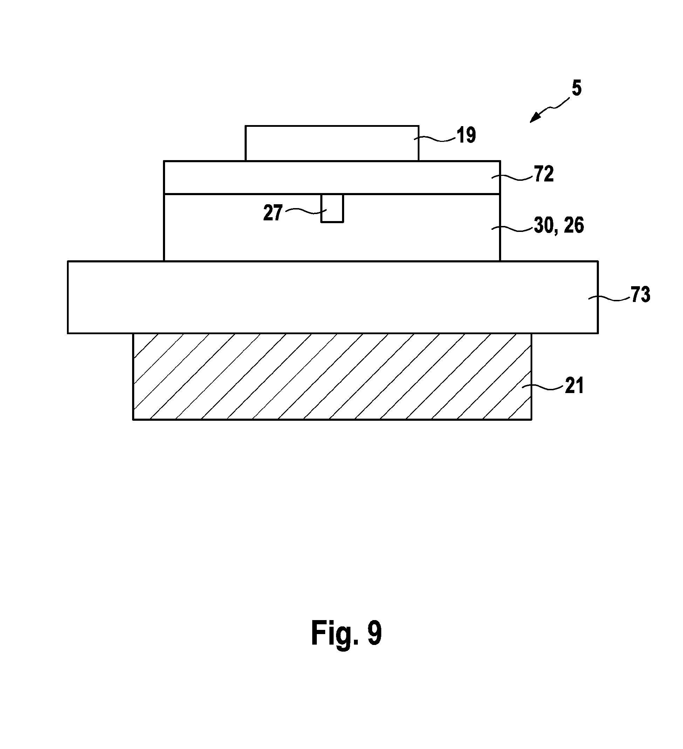

Wie in Fig. 9 in einer Schnittdarstellung gezeigt kann der Drehzahlsensor 5 einen Chip umfassen, in dem die Signalaufbereitungsschaltung 30 und die Testvorrichtung 26 untergebracht sind. Zusammen mit dieser kann in dem Chip auch der Magnetfeldsensor 27 untergebracht sein, der besonders bevorzugt als vertikal messendes Hall-Element ausgebildet ist. Auf dem Chip mit den zuvor genannten Schaltungen kann eine Passivierungsschicht 72 ausgebildet sein, auf der der magnetoresisitve Messaufnehmer 13 angeordnet sein kann, wobei der gesamte Aufbau auf einem Schaltungsträger 73, wie beispielsweise einer Leiterplatte gehalten sein kann. Auf der dem Aufbau gegenüberliegenden Seite des Schaltungsträgers 73 kann der Stützmagnet 21 gehalten sein.

## Patentansprüche

1. Drehzahlsensor (5), insbesondere Raddrehzahlsensor, umfassend
- einen magnetischen Encoder (13) zum Erregen eines magnetischen Encoderfeldes (17) in Abhängigkeit einer zu erfassenden Drehzahl (6),
- einen Lesekopf (14) mit einem magnetoresistiven Messaufnehmer (19) zum Abgeben eines Ausgangssignals (31) in Abhängigkeit des magnetischen Encoderfeldes (17) und des magnetoresistiven Messaufnehmers (19),
- einen ein magnetisches Stützfeld (22) erregenden Stützmagneten (21), der eine Empfindlichkeit des magnetoresistiven Messaufnehmers (19) beeinflusst, und
- einen Magnetfeldsensor (27), der eingerichtet ist, eine Komponente (24) eines am magnetoresistiven Messaufnehmer (19) wirksamen Magnetfeldes (23) in Richtung des magnetischen Stützfeldes (22) zu erfassen.

2. Drehzahlsensor (5) nach Anspruch 1, wobei der Magnetfeldsensor (27) einen weiteren magnetoresistiven Messaufnehmer umfasst.

3. Drehzahlsensor (5) nach Anspruch 1, wobei der Magnetfeldsensor (27) einen Hall-Sensor umfasst.

4. Verfahren zur Verwendung eines Magnetfeldsensors (27) in einem Drehzahlsensor (5) nach einem der vorstehenden Ansprüche, umfassend:
- Erfassen der Komponente (24) des am magnetoresistiven Messaufnehmer (19) wirksamen Magnetfeldes (23) in Richtung des magnetischen Stützfeldes (22), und
- Ausgeben eines Fehlersignales (40), wenn die erfasste Komponente (24) eine vorbestimmte Bedingung (58, 70) erfüllt.

5. Verfahren nach Anspruch 4, wobei die vorbestimmte Bedingung (58, 70) einen vorbestimmten Wert (58) für die erfasste Komponente (24) umfasst, den die erfasste Komponente (24) nicht unterschreiten darf.

6. Verfahren nach Anspruch 4 oder 5, wobei die vorbestimmte Bedingung (58, 70) einen Grenzwert (70) für ein Verhältnis (64) zwischen einem Wechselanteil (63) und einem Gleichanteil (62) in der erfassten Komponente (24) umfasst, den das Verhältnis (64) nicht überschreiten darf.

7. Verfahren nach Anspruch 6, wobei der vorbestimmte Reservebetrag von einer Toleranz für eine Lageverschiebung zwischen dem magnetischen Encoder und dem Stützmagneten abhängig ist.

8. Steuervorrichtung (26), die eingerichtet ist, ein Verfahren nach einem der vorstehenden Ansprüche 4 bis 7 auszuführen.

9. Drehzahlsensor (5) nach einem der Ansprüche 1 bis 3, umfassend eine Steuervorrichtung (26) nach Anspruch 8.
